Europäisches Patentamt

European Patent Office

Office européen des brevets

(11) Numéro de publication: **0 281 472**
**A1**

(12) # DEMANDE DE BREVET EUROPEEN

(21) Numéro de dépôt: 88400448.2

(22) Date de dépôt: 26.02.88

(51) Int. Cl.⁴: **A 01 D 9/06**

(30) Priorité: 03.03.87 FR 8702843

(43) Date de publication de la demande:
07.09.88 Bulletin 88/36

(84) Etats contractants désignés:
BE CH DE ES GB IT LI

(71) Demandeur: **Garnier, Alain**
**1, Impasse Docteur Zipfel**
**F-21000 Dijon (FR)**

(72) Inventeur: **Garnier, Alain**
**1, Impasse Docteur Zipfel**
**F-21000 Dijon (FR)**

(74) Mandataire: **Bruder, Michel**
**10 rue de la Pépinière**
**F-75008 Paris (FR)**

(54) **Fourche à griffes.**

(57) La présente invention concerne une fourche à griffes comportant deux nappes de griffes fixe et mobile.

Cette fourche est caractérisée en ce que la seconde nappe mobile (7) comporte une pièce (9), avantageusement cylindrique, fixée perpendiculairement aux griffes (8), à distance de son axe de rotation (3), pièce (9) autour de laquelle est articulé un étrier de relevage (12) dont l'extrémité libre s'étend jusqu'au manche (4) contre lequel elle peut se déplacer longitudinalement par l'action du crochet terminal (16) d'une tige (15) fixée rigidement à une poignée (14) coulissant sur le manche (4) dont le mouvement est rappelé par un ressort (17) fixé, d'un côté au manche (4) et, de l'autre côté, au crochet terminal (16) de la tige (15).

Fig. 1

EP 0 281 472 A1

**Description**

La présente invention concerne une fourche à griffes comportant en superposition deux nappes de griffes, l'une fixe par rapport au manche et l'autre mobile, grâce à un mécanisme de relevage.

Les fourches à griffes sont connues dans de très nombreuses applications qu'il s'agisse de déplacer du foin ou du fumier ou plus simplement pour ramasser des objets très fractionnés comme des feuilles mortes, brindilles ou papier...Chacun connaît toutefois les difficultés pour ramasser et surtout transporter des feuilles mortes, par exemple, dont la masse volumique est très faible. Les amas de feuilles se disloquent sur la fourche dès son relevage et on constate qu'il est nécessaire d'opérer avec précaution ou avec un rendement très faible.

On remédie souvent à de tels inconvénients en bloquant l'amas instable accumulé sur les griffes de la fourche par tous moyens tels que la main de l'opérateur qui doit alors se contenter de son autre main pour le maintien et le déplacement de la fourche ainsi chargée. Une solution a été proposée en superposant aux griffes de la fourche classique une seconde nappe de griffes articulée librement par rapport à la première. De cette manière, la nappe mobile étant relevée, on charge la nappe fixe de la fourche et par un mouvement sec, on fait retomber la nappe mobile qui vient coincer l'amas de feuilles. On comprend bien toute la rusticité de la solution qui consiste en un compromis incontrôlable entre volume de charge et maintien de la charge. La présente invention apporte une solution à tous ces problèmes en procurant une fourche à griffes comportant une première nappe fixe, d'au moins deux griffes issues d'un support commun, fixée de façon connue à un manche de manutention suivant un angle obtus, et une seconde nappe mobile superposée à la première nappe, constituée d'au moins deux griffes, de préférence intercalées dans les griffes de la première nappe et issues d'un support commun articulé, par rapport à la première nappe, pour pouvoir tourner autour d'un axe coincidant avec celui du support de la première nappe, au moyen d'un mécanisme de relevage, caractérisée en ce que la seconde nappe mobile comporte une pièce avantageusement cylindrique, fixée perpendiculairement aux griffes, à distance de son axe de rotation, pièce autour de laquelle est articulé un étrier de relevage dont l'extrémité libre s'étend jusqu'au manche contre lequel elle peut se déplacer longitudinalement par l'action du crochet terminal d'une tige fixée rigidement à une poignée coulissant sur le manche dont le mouvement est rappelé par un ressort fixé, d'un côté au manche et de l'autre côté, au crochet terminal de la tige. Ce ressort contribuant au rappel de l'étrier sensiblement contre le manche lors des manipulations de la poignée coulissante.

Ainsi est-il possible de contrôler à tout instant l'ouverture des griffes de la fourche proposée par le simple jeu d'une poignée coulissante située sur le manche, au point normal de préhension de l'outil.

D'autres avantages ressortent de l'invention puisqu'il est possible de maintenir les griffes mobiles en appui positif sur les objets recueillis par l'action des griffes fixes, le tout permettant au manipulateur de contrôler la charge avec ses deux mains. Il est, en outre, avantageux de configurer les griffes de la fourche, suivant l'invention, de manière à optimiser la capacité de chargement : pour cela on a prévu de donner aux griffes fixes une forme préférentiellement rectiligne dans leur partie active et recourbée dans leur partie arrière pour coopérer avec leur support à l'obliquité du manche juste nécessaire pour le bon fonctionnement du mécanisme de relevage de la nappe mobile. Celle-ci est, d'ailleurs, munie de griffes rectilignes avantageusement recourbées sur leur partie antérieure de façon que leurs extrémités concourent avec celles des griffes fixes.

L'espace utile délimité par les deux nappes de griffes peut également varier dans de larges proportions : en effet, on peut avantageusement décaler les griffes mobiles par rapport aux griffes fixes, ce qui permet un croisement des deux nappes depuis une position minimale, les supports venant en butée, jusqu'à une ouverture maximale, le support des griffes mobiles venant en appui sur le plot de fixation du ressort de rappel avantageusement utilisé en butée, ce qui a pour effet complémentaire et inattendu de protéger ledit ressort, non seulement dans sa course qui est ainsi limitée, mais aussi dans sa forme, en évitant son écrasement.

On décrira ci-après, à titre d'exemple non limitatif, une forme d'exécution de la présente invention, en référence au dessin annexé sur lequel :

La figure 1 est une vue en élévation d'une fourche à griffes suivant l'invention représentée en traits mixtes dans ses deux positions extrêmes, et en trait plein dans la position intermédiaire où les griffes sont pointe à pointe.

La figure 2 est une vue en plan de la fourche à griffes suivant l'invention.

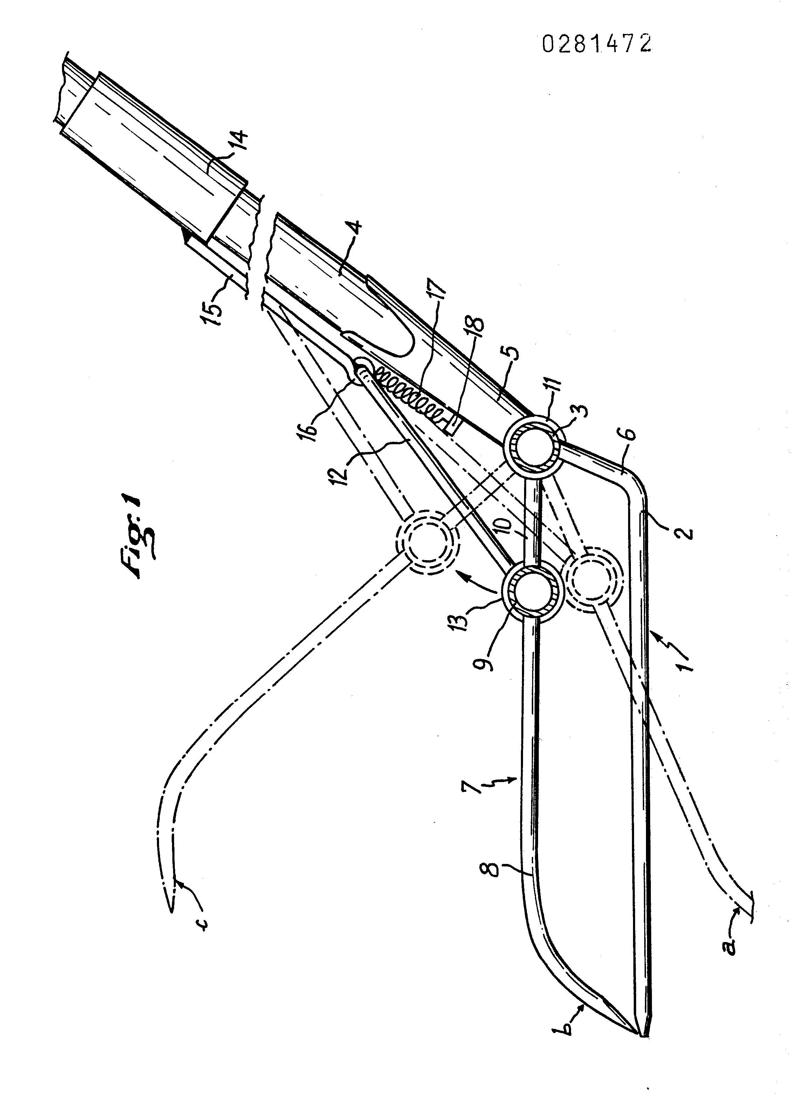

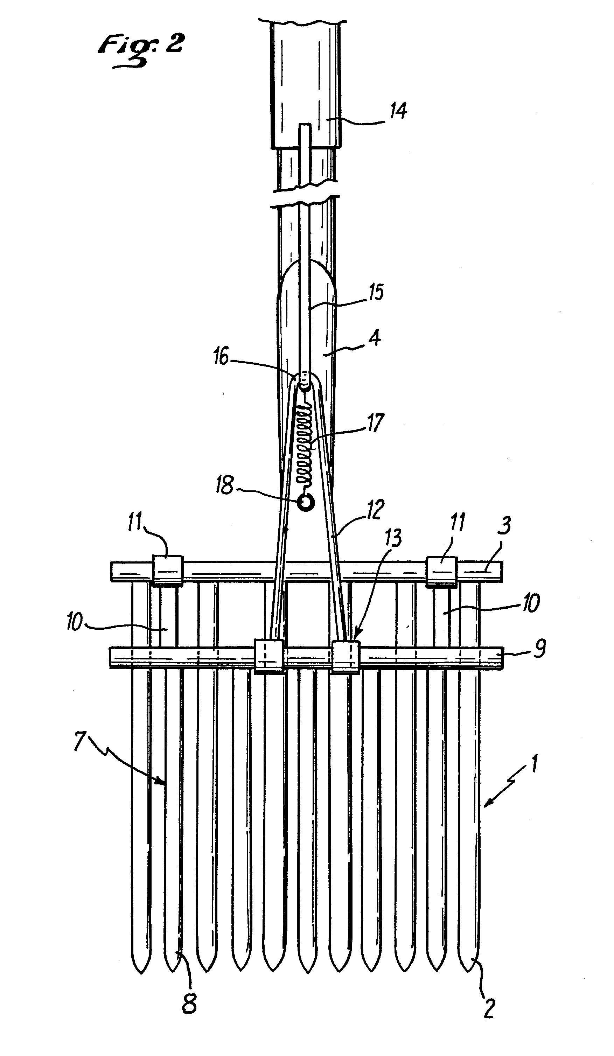

La fourche à griffes suivant l'invention, conformément aux figures 1 et 2, est constituée d'une première nappe 1 comprenant six griffes 2 en acier, issues perpendiculairement d'un support commun 3 fixé au manche 4, de façon connue, grâce à un manchon 5 soudé au support 3, dans lequel est enchâssé le manche 4. Le support 3 est réalisé dans une barre d'acier avantageusement tubulaire, s'étendant sur une longueur délimitant en largeur la capacité souhaitée de la fourche.

Les griffes 2 sont rectilignes sur toute leur longueur utile, dépendant de la capacité souhaitée de la fourche, et elles sont coudées à leur partie arrière 6 aboutissant au support 3 de manière à donner à la nappe fixe 1 un angle d'environ 120° avec le manche 4.

Une deuxième nappe 7 comporte, comme représenté sur la figure 2, cinq griffes 8, en acier et de même section que les griffes 2, issues perpendiculairement d'un support commun 9, sensiblement identique au support 3, et maintenu parallèlement à ce support 3. Les griffes 8 sont soudées à intervalles réguliers sur le support 9 de telle manière qu'elles puissent s'intercaler entre les griffes 2 de la nappe fixe 1. Les griffes 8 sont rectilignes et sont avantageusement coudées dans leurs parties terminales de façon que les pointes des griffes 2 et 8 se correspondent lorsque les deux nappes 1 et 7 sont parallèles comme représentées dans la position b de la figure 1.

Deux bras identiques 10, solidaires du support 9 et s'étendant perpendiculairement à ce support, sensiblement à chacune de ses extrémités, sont fixés à deux manchons 11 pouvant tourner librement autour du support 3 de telle sorte que la nappe 7 soit articulée autour d'un axe coincidant avec celui du support 3 et puisse être relevée depuis une position "a" sur la figure 1 inclinée vers le bas et en butée sur la nappe fixe 1, l'espace utile de préhension de la fourche étant alors quasiment nul, jusqu'à une position "c" inclinée vers le haut et correspondant à une ouverture maximale de la fourche, la nappe 2 étant alors en butée sur le manche 4, comme on le verra plus loin.

La nappe mobile est déplacée par un mécanisme de relevage comportant un étrier 12 en forme de "V" renversé en acier dont les extrémités sont soudées sur deux manchons 13 pouvant tourner librement sur le support 9. Le sommet de l'étrier 12 vient reposer sur le manche 4 et fait avec ledit manche 4 un angle suffisant pour constituer un bras de levier nécessaire aux mouvements de la nappe mobile 7. Les bras 10 et la hauteur de l'étrier 12 sont calculés en fonction de la taille de la nappe 7 à déplacer.

Le mouvement alternatif de l'étrier 12 entraînant la rotation de la nappe mobile 7 est procuré par une poignée 14 en forme de cylindre coulissant juste autour du manche 4 et disposée sensiblement à mi-hauteur de ce manche 4. Issue de la poignée 14 une tringle en acier 15 s'étend vers le bras de la fourche, le long du manche 4, pour venir accrocher le sommet de l'étrier 12 dans un anneau terminal fermé 16. Un ressort 17 à spires jointives, fixé d'un côté à l'anneau 16 et de l'autre au manche 4, vient rappeler la tige 15 lorsque la poignée 14 tend à relever la nappe mobile 7. La fixation du ressort 17 au manche 4 se fait par un plot d'ancrage 18 disposé sur le manche 4 à une distance du centre du support 3 égale à la distance entre les deux supports 3 et 9. La hauteur du plot 18 est supérieure au diamètre du ressort 17 pour servir de butée au support 9 lorsque la nappe mobile 7 est totalement relevée par mouvement de la poignée 14 vers le haut du manche 4. Ainsi préserve-t-on le ressort 17 qui, sans la butée 18, serait écrasé par le support 9. De même la butée 18 vient limiter l'extension du ressort 17 dont la longueur au repos est d'ailleurs calculée pour que la tête de l'étrier 12 et l'anneau 16 restent constamment en appui relatif sur le manche 4, tout en permettant des mouvements répétés de la poignée 14 sans fatigue excessive de l'opérateur.

La fourche à griffes suivant l'invention est particulièrement adaptée au ramassage des feuilles mortes et plus généralement au ramassage d'objets légers et très fractionnés.

**Revendications**

1.- Fourche à griffes comportant une première nappe fixe, d'au moins deux griffes issues d'un support commun, fixée de façon connue à un manche de manutention suivant un angle obtus, et une seconde nappe mobile superposée à la première nappe, constituée d'au moins deux griffes, de préférence intercalées dans les griffes de la première nappe et issues d'un support commun articulé, par rapport à la première nappe, pour pouvoir tourner autour d'un axe coincidant avec celui du support de la première nappe, au moyen d'un mécanisme de relevage, caractérisée en ce que la seconde nappe mobile (7) comporte une pièce (9), avantageusement cylindrique, fixée perpendiculairement aux griffes (8), à distance de son axe de rotation (3), pièce (9) autour de laquelle est articulé un étrier de relevage (12) dont l'extrémité libre s'étend jusqu'au manche (4) contre lequel elle peut se déplacer longitudinalement par l'action du crochet terminal (16) d'une tige (15) fixée rigidement à une poignée (14) coulissant sur le manche (4) dont le mouvement est rappelé par un ressort (17) fixé, d'un côté au manche (4) et, de l'autre côté, au crochet terminal (16) de la tige (15), ce ressort contribuant au rappel de l'étrier (12) sensiblement contre le manche (4) lors des manipulations de la poignée coulissante (14).

2.- Fourche à griffes suivant la revendication 1 caractérisée en ce que la pièce d'articulation (9) de l'étrier de relevage (12) de la nappe mobile (7) supporte, en avant, les griffes (8) de la nappe mobile (7) et, en arrière, deux bras (10) fixés de part et d'autre de la pièce d'articulation (9), perpendiculairement à elle, de préférence dans le même plan que les griffes (7) et qui s'étendent jusqu'au support (3) de la nappe fixe (1) autour duquel ces bras (10) s'enroulent pour constituer l'articulation (11) des deux nappes (1,7) de griffes (2,8).

3.- Fourche à griffes suivant l'une quelconque des revendications précédentes caractérisée en ce que l'obliquité de la première nappe fixe (1) par rapport au manche de maintien (4) est obtenue par cintrage de la partie postérieure (6) des griffes (2) suivant une hauteur et un angle d'ouverture déterminés pour chaque utilisation de la fourche, la partie antérieure des griffes (2) restant avantageusement rectiligne.

4.- Fourche à griffes suivant l'une quelconque des revendications précédentes caractérisée en ce que les griffes (8) de la seconde nappe mobile (7) sont recourbées, à leurs extrémités, vers les griffes (2) de la première nappe fixe (1) de telle manière que les deux nappes soient parallèles lorsque les pointes des griffes (2,8) sont en coincidence, pour augmenter la capacité de prise et de rétention des objets à déplacer.

5.- Fourche à griffes suivant l'une quelconque des revendications précédentes caractérisée en ce que l'étrier de relevage (12) est constitué d'une tige rigide pliée en forme de "V" renversé dont chacune des deux extrémités est fixée à une bague (13) libre en rotation sur la pièce d'articulation (9) de la première nappe mobile (7) et dont le sommet passe dans la boucle du crochet terminal (16) de la poignée de manipulation (14).

6.- Fourche à griffes suivant l'une quelconque des revendications précédentes caractérisée en ce que le ressort de rappel (17) est du type à spires jointives en nombre suffisant pour que, d'une part, la tige (15) de la poignée (14) et le sommet de l'étrier (12) restent constamment dans le prolongement du manche (4) et, d'autre part, il assure une force de rappel de la poignée (14) compatible avec des manipulations répétées.

7.- Fourche à griffes suivant la revendication 6 caractérisée en ce que le plot d'ancrage du ressort (17) sur le manche de manipulation (4) est muni d'une butée (18) dont la hauteur est supérieure au diamètre du ressort (17) de manière que, après relevage de la seconde nappe mobile (7) jusqu'à une position maximale, le ressort de rappel (17) soit protégé de tout écrasement, tout en limitant son allongement.

8.- Fourche à griffes suivant l'une quelconque des revendications précédentes caractérisée en ce que les griffes (8) de la seconde nappe mobile (7) sont décalées horizontalement par rapport aux griffes (2) de la première nappe fixe (1), ce qui permet, par le croisement des deux nappes (1,7), de délimiter une zone minimale dans le chargement de la fourche, déterminée par la rencontre du support (9) des griffes mobiles (7) sur les griffes fixes (2).

Fig.1

Fig. 2

0281472

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-1 939 475  (WALSH) <br> * En entier * <br> --- | 1,2,3,8 | A 01 D   9/06 |
| A | FR-A-  357 882  (COSTES) <br> * En entier * <br> --- | 1,2,4,8 | |
| A | FR-A-  345 435  (SIEBER) <br> --- | | |
| A | DE-U-8 536 153  (VOM BRAUCKE) <br> ----- | | |

**DOMAINES TECHNIQUES RECHERCHES (Int. Cl.4)**

A 01 D
A 01 B

Le présent rapport a été établi pour toutes les revendications

| Lieu de la recherche | Date d'achèvement de la recherche | Examinateur |
|---|---|---|
| LA HAYE | 24-05-1988 | DE LAMEILLIEURE D. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

 

& : membre de la même famille, document correspondant

EPO FORM 1503 03.82 (P0402)